# EUROPEAN PATENT SPECIFICATION

(11) **EP 1 985 807 B1**
(45) Date of publication and mention of the grant of the patent: **26.06.2019**
(21) Application number: 08251307.8
(22) Date of filing: 03.04.2008
(51) Int. Cl.: F04D 29/10, F16J 15/44, F01D 11/00, F01D 11/12

(54) **Seal for a gas turbine and corresponding manufacturing method**
Gasturbinendichtung und entsprechendes Herstellungsverfahren
Garniture d'étanchéité de turbine à gaz et procédé associé de fabrication

(30) Priority: 18.04.2007 US 736711
(43) Date of publication of application: 29.10.2008
(73) Proprietor: United Technologies Corporation, Farmington, CT 06032 (US)
(72) Inventor: Alvanos, Ioannis, West Springfield Massachusetts 01089 (US)
(74) Representative: Dehns

(56) References cited:
- WO-A1-03/010419
- DE-A1- 3 147 713
- DE-A1-102004 057 360
- GB-A- 1 361 814
- GB-A- 2 023 733
- US-A- 4 055 041
- US-A- 5 618 633
- US-A1- 2001 004 436
- US-A1- 2003 175 116
- US-A1- 2006 131 815
- US-B1- 6 203 021

## Description

### BACKGROUND OF THE INVENTION

This application relates to a gas turbine engine, wherein open cell seal material is formed integrally with a closed mount plate.

Gas turbine engines are known, and typically include a compression section receiving and compressing air. The compressed air is delivered downstream into a combustion section. The air is mixed with fuel in the combustion section and burned. Products of this combustion pass downstream over turbine rotors. The turbine rotors are driven to rotate, and create power. Abradable seals are normally provided at the tips of the rotor blades (or fan blades) to reduce leakage, and examples of such seals are shown in US 6203021, US 4055041, GB 1361914, US 2001/0004436 and US 2003/0175116.

The design of gas turbine engines includes a good deal of effort to reduce leakage in the turbine section. The turbine section typically includes a plurality of rotors mounting a plurality of turbine blades, and which are the portions driven to rotate by the products of combustion. Seals on these rotors rotate in close proximity to static sealing structures to reduce leakage of pressurized fluid.

In one widely used type of seal, the rotors carry knife edge runners which are closely spaced from abradable static lands. The abradable static lands are abraded away by the knife edged runners with contact, resulting in a close fitting interface and restriction to leakage.

In the art, the abradable structures are formed of honeycomb ribbon material mounted to an underlying mount or base structure. Some braze material is placed on a surface on the mount structure and the honeycomb ribbon is then brazed to this surface. As brazing occurs, the braze material wicks upwardly into the honeycomb ribbon cells. With this prior art structure, portions of the honeycomb material closest to the surface are no longer abradable as they are filled with the braze material. In some instances, the wicked portion is beyond manufacturing tolerance and must be repaired; this adds significant cost and time to the manufacturing process. The wicked portion also adds to the radial space requirements of the seal, which increases the overall size and weight of the engine.

### SUMMARY OF THE INVENTION

According to a first aspect of the present invention, there is provided a gas turbine engine comprising: a compressor; a combustor; a turbine section including a rotor, said rotor having a cover plate seal which carries a knife edge runner; and a static housing which includes a mount structure carrying a static seal land, the knife edge runner rotating adjacent the static seal land; wherein the static seal land includes an abradable seal formed of an integral piece of abradable material, said integral piece of abradable material including a largely closed mount plate and an abradable surface facing the knife edge runner, the abradable surface having an open cell structure, the mount plate secured to a mount structure.

The open cell structure need not be honeycombed, as it can be any shape which can be machined in the abradable material. Thus, the open cell structure can have a shape specifically designed to maximize the resistance of flow, or provide any other design goal.

These and other features of the present invention can be best understood from the following specification and drawings, the following of which is a brief description.

### BRIEF DESCRIPTION OF THE DRAWINGS

Figure 1A is a schematic view of a gas turbine engine.
Figure 1B shows a feature of the prior art.
Figure 1C is an enlarged view of a portion of Figure 1B.
Figure 1D shows another application for the present invention.
Figure 1E shows yet another application for the present invention.
Figure 2 shows an embodiment of the present invention.
Figure 3A shows one alternative open cell shape.
Figure 3B shows another alternative open cell shape.
Figure 3C shows another alternative open cell shape.
Figure 3D shows another alternative open cell shape.
Figure 3E shows another alternative open cell shape.
Figure 3F shows another alternative open cell shape.
Figure 3G shows another alternative open cell shape.
Figure 3H shows another alternative open cell shape.
Figure 3I shows another alternative open cell shape.
Figure 3J shows another alternative open cell shape.
Figure 4A shows a cross-sectional view through the open cell structure.
Figure 4B shows an alternative for the orientation of the cells.

### DETAILED DESCRIPTION OF THE PREFERRED EMBODIMENT

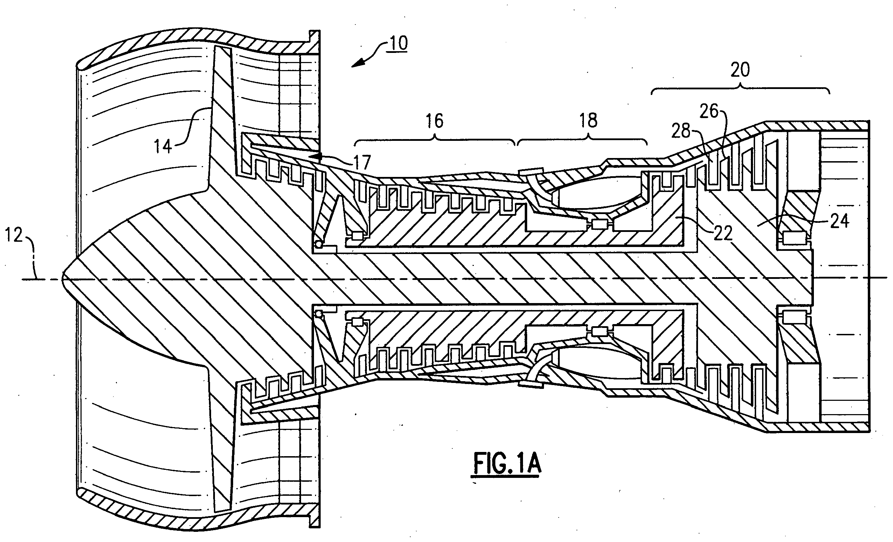

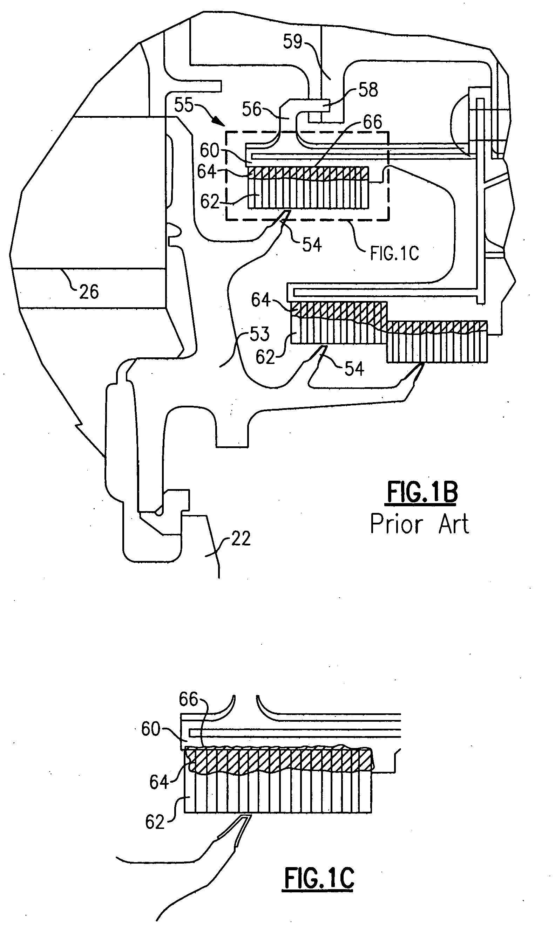

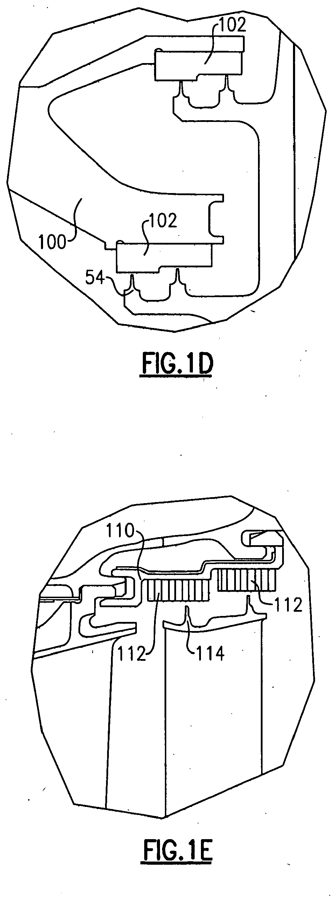

A gas turbine engine 10, such as a turbofan gas turbine engine, circumferentially disposed about an engine centerline, or axial centerline axis 12 is shown in Figure 1A. The engine 10 includes a fan 14, compressors 16 and 17, a combustion section 18 and a turbine 20. As is well known in the art, air compressed in the compressor 16 is mixed with fuel which is burned in the combustion section 18 and expanded in turbine 20. The turbine 20 includes rotors 22 and 24, which rotate in response to the expansion, driving the compressors 16 and 17, and fan 14. The turbine 20 comprises alternating rows of rotary airfoils or blades 26 and static airfoils or vanes 28. This structure is shown somewhat schematically in Figure 1. While one engine type is shown, this application extends to any gas turbine architecture, for any application.

As shown in Figure 1B, the rotor blades 26 and rotor 22 (or 24) also carry a cover plate seal 53. The cover plate seal rotates, and carries knife edge runners 54 which rotate in close proximity to sealing structure 55. Typically, there are several circumferentially spaced sealing lands 55. Sealing lands 55 carry a mount structure 56 having tabs 58 to be received in a slot in static housing 59. Typically, there are a plurality of circumferentially spaced sealing lands, each including the mount structure 56. A mount surface or plate 60, which is part of mount structure 56, receives honeycomb ribbon material 62. The honeycomb ribbon material is formed of some abradable material. In one known seal, a woven honeycomb shaped ribbon material formed of a nickel based alloy, such as Hastelloy X™ is utilized.

As shown in Figures 1B and 1C, brazing material 66 is placed on a face of the plate 60. This brazing material is used to secure the honeycomb ribbon material 62 to the plate 60. Powder braze material, paste braze material, or tape braze are used. The braze material is placed on the plate, the ribbon material is then placed on the braze material. The assembled mount structure 56 and ribbon 62 is then run through a furnace. The braze material melts and wicks into the open cells on the honeycomb in the ribbon 62. Thus, when the combined sealing land 55 leaves the furnace, the braze material will have filled the portion 64 of the cells adjacent to the plate 60. This portion will no longer be abradable, and thus will limit the effectiveness of the sealing land 55 and increase the radial dimension requirements of the seal and the overall engine.

Figure 1D shows another location 100 wherein the sealing structure 102 may be full hoop, and thus not utilizing a plurality of circumferentially spaced segments.

Figure 1E shows another embodiment which is above an outer shroud of the rotating turbine blades. Again, there is a mount plate 110 and ribbon material 112 to be abraded by knife edged runners 114. It should be understood that while the invention is only illustrated in the Figure 1C location, similar sealing structure can be provided under this invention for the Figure 1D and Figure 1E applications, or any other location that uses abradable seal material.

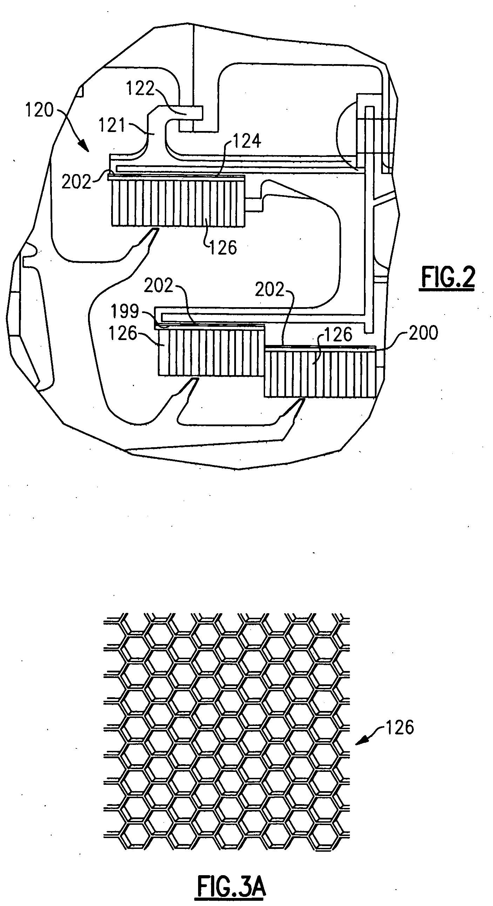

As shown in Figure 2, in this application, the land 120 is integrally formed such that mount structure 121 includes tab 122 and a surface 199. A combined mount plate 200 and open cell structure 126 are integrally machined from a single piece of material. Brazing material 202 is placed between mount plate 200 and surface 199 and heated in a furnace. Since mount plate 200 is largely closed, there will be no wicking of the brazing material into the open cell structure.

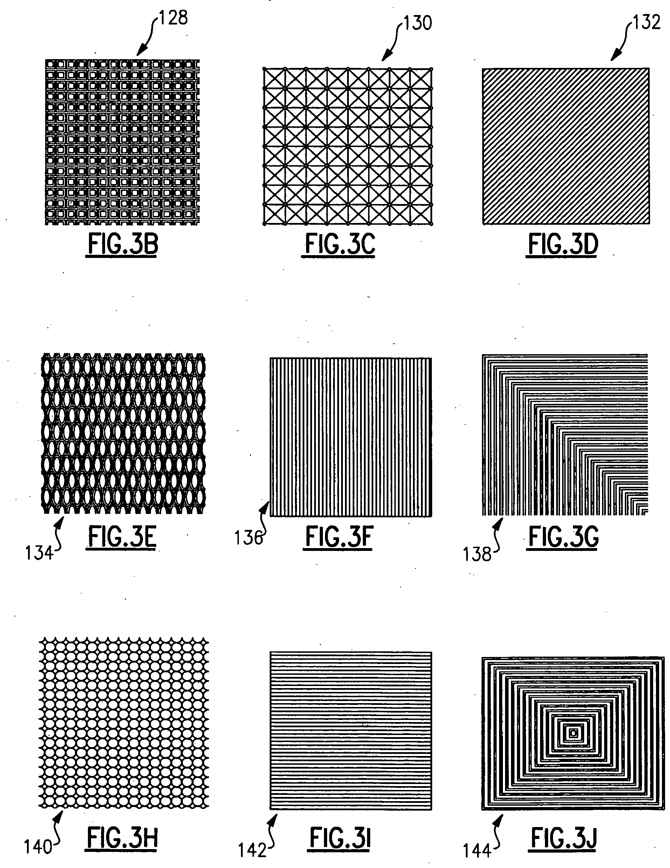

As shown in Figure 3A, the open cell structure can be honeycomb shaped, as shown at 126, and as used in the prior art. However, the use of the inventive structure allows various other open cell shapes such as a square/rectangular shape 128 as shown in Figure 3B. Figure 3C shows triangular shapes 130. Figure 3D shows an angled fin shape 132. Figure 3E shows oval shapes 134. Figure 3F shows vertical fin shapes 136. Figure 3G shows combined angled fin shapes 138. Figure 3H shows round shapes 140. Figure 3I shows horizontal fin shapes 142. Figure 3J shows multi-angled fin shapes 144. The exact nature of the open cell structure can be designed to provide particular flow restriction features. The material selected for the integral mount structure and abradable seal structure 120 is selected to be appropriate abradable material.

The shapes can be cut into the material by conventional machining, wire EDM machining, laser machining, conventional milling, chemical milling etc. A near-net cast part can be produced to possess the mount plate and to approximate the open cell structure to reduce material removal. The wall thickness is on the order of the conventional ribbon thickness to ensure the abradability is not affected.

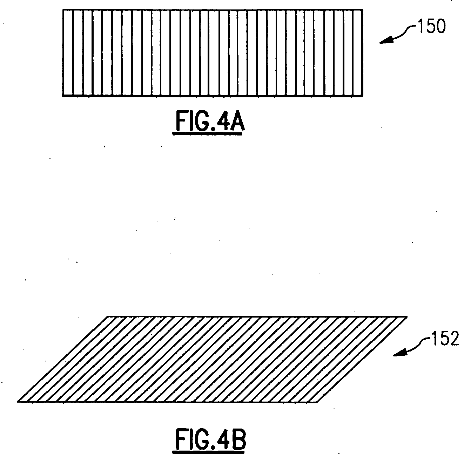

Further, since the open cell structure is machined into the material, the orientation of the cells in relation to a radial plane can vary, such as shown at 0° at Figure 4A at 150, or at an angle such as 45° shown at 152 in Figure 4B.

While the mount plate may well be entirely closed, it is also within the scope of this invention that some limited openings can be formed through the mount plate for mounting, or seal cooling for example. In addition, the term "plate" should not be interpreted to require a planar structure. In fact, in the disclosed embodiment, the mount plate would curve continuously or in segments about a central axis, as would the prior art seal structures.

Several embodiments of the present invention are disclosed. However, a worker of ordinary skill in the art would recognize that certain modifications come within the scope of this invention. For that reason the following claims should be studied to determine the true scope and content of this invention.

## Claims

1. A gas turbine engine (10) comprising:
a compressor (16);
a combustor (18);
a turbine section (20) including a rotor, said rotor having a cover plate seal (53) which carries a knife edge runner (54); and
a static housing (59) which includes a mount structure (56) carrying a static seal land (55), the knife edge runner (54) rotating adjacent the static seal land (55);
wherein the static seal land (55) includes an abradable seal (120) formed of an integral piece of abradable material, said integral piece of abradable material including a largely closed mount plate (200) and an abradable surface facing the knife edge runner (54), the abradable surface having an open cell structure (126), the mount plate (200) secured to a mount structure (121).

2. The gas turbine engine as set forth in Claim 1, wherein said open cell structure (126) is in a repeating pattern.

3. The gas turbine engine as set forth in Claim 1 or Claim 2, wherein the mount structure (121) includes a tab (122) mounting the mount structure to the housing.

4. The gas turbine engine as set forth in any preceding Claim, wherein the open cell structure (126) includes a plurality of shapes arranged in an array.

5. The gas turbine engine as set forth in any preceding Claim, wherein the open cell structure (126) includes a plurality of fin shapes with intermediate spaces/openings.

6. The gas turbine engine as set forth in any preceding Claim, wherein the open cell structure (126) extends along an angle towards a central axis of the engine (10) or of the mount plate (200).

7. The gas turbine engine as set forth in Claim 6, wherein the angle extends radially inwardly perpendicular to the central axis.

8. The gas turbine engine as set forth in Claim 6, wherein the angle is non-perpendicular to the central axis.

9. The gas turbine engine as set forth in any preceding Claim, wherein the mount plate (200) is entirely closed.

10. The gas turbine engine as set forth in any preceding Claim, wherein the mount plate (200) is non planar.

11. The gas turbine engine as set forth in any preceding Claim, wherein the mount plate (200) is secured to the mount structure (121) with braze (202).

12. The gas turbine engine as set forth in any preceding Claim, wherein the open cell structure is machined into the integral piece of abradable material.

13. The gas turbine engine as set forth in any preceding Claim, wherein the mount structure (121) extends over a limited circumferential extent, and is used in combination with other abradable seal and mount combinations.

## Patentansprüche

1. Gasturbine (10), umfassend:
einen Verdichter (16);
eine Brennkammer (18);
einen Turbinenabschnitt (20) mit einem Rotor, wobei der Rotor eine Abdeckplattendichtung (53) aufweist, die ein Schneidprofil (54) trägt; und
ein feststehendes Gehäuse (59), das eine Befestigungskonstruktion (56) aufweist, die eine feststehende Dichtungsfläche (55) trägt, wobei sich das Schneidprofil (54) angrenzend an die feststehende Dichtungsfläche (55) dreht;
wobei die feststehende Dichtungsfläche (55) eine Einlaufdichtung (120) aufweist, die aus einem einstückigen Teil aus abtragbarem Material gebildet ist, wobei das einstückige Teil aus abtragbarem Material eine weitgehend geschlossene Befestigungsplatte (200) und eine abtragbare Fläche aufweist, die dem Schneidprofil (54) zugewandt ist, wobei die abtragbare Fläche eine offene Zellstruktur (126) aufweist, wobei die Befestigungsplatte (200) an einer Befestigungskonstruktion (121) gesichert ist.

2. Gasturbine nach Anspruch 1, wobei die offene Zellstruktur (126) ein sich wiederholendes Muster aufweist.

3. Gasturbine nach Anspruch 1 oder Anspruch 2, wobei die Befestigungskonstruktion (121) eine Lasche (122) aufweist, mit der die Befestigungskonstruktion an dem Gehäuse montiert ist.

4. Gasturbine nach einem der vorhergehenden Ansprüche, wobei die offene Zellstruktur (126) eine Vielzahl von in einer Gruppierung angeordneten Formen aufweist.

5. Gasturbine nach einem der vorhergehenden Ansprüche, wobei die offene Zellstruktur (126) eine Vielzahl von Lamellenformen mit Zwischenräumen/-öffnungen aufweist.

6. Gasturbine nach einem der vorhergehenden Ansprüche, wobei die offene Zellstruktur (126) zu einer Mittelachse der Turbine (10) oder der Befestigungsplatte (200) hin entlang einem Winkel verläuft.

7. Gasturbine nach Anspruch 6, wobei der Winkel radial nach innen senkrecht zur Mittelachse verläuft.

8. Gasturbine nach Anspruch 6, wobei der Winkel nicht senkrecht zur Mittelachse verläuft.

9. Gasturbine nach einem der vorhergehenden Ansprüche, wobei die Befestigungsplatte (200) vollständig geschlossen ist.

10. Gasturbine nach einem der vorhergehenden Ansprüche, wobei die Befestigungsplatte (200) nicht eben ist.

11. Gasturbine nach einem der vorhergehenden Ansprüche, wobei die Befestigungsplatte (200) mit Hartlot (202) an der Befestigungskonstruktion (121) gesichert ist.

12. Gasturbine nach einem der vorhergehenden Ansprüche, wobei die offene Zellstruktur mit maschineller Bearbeitung in das einstückige Teil aus abtragbarem Material eingebracht ist.

13. Gasturbine nach einem der vorhergehenden Ansprüche, wobei die Befestigungskonstruktion (121) über eine begrenzte Umfangsausdehnung verläuft und in Verbindung mit weiteren Einlaufdichtungs- und Befestigungskombinationen verwendet wird.

## Revendications

1. Moteur à turbine à gaz (10), comprenant :
un compresseur (16) ;
une chambre de combustion (18) ;
une section de turbine (20) comportant un rotor, ledit rotor ayant une garniture d'étanchéité de plaque de recouvrement (53) qui porte une glissière à arête vive (54) ; et
un carter statique (59) qui comporte une structure de montage (56) portant une bande de garniture d'étanchéité statique (55), la glissière à arête vive (54) tournant de manière adjacente à la bande de garniture d'étanchéité statique (55) ;
dans lequel la bande de garniture d'étanchéité statique (55) comporte une garniture d'étanchéité abradable (120) formée d'une pièce intégrale en matériau abradable, ladite pièce intégrale en matériau abradable comportant une plaque de montage en grande partie fermée (200) et une surface abradable tournée vers la glissière à arête vive (54), la surface abradable ayant une structure à cellules ouvertes (126), la plaque de montage (200) étant fixée à une structure de montage (121).

2. Moteur à turbine à gaz selon la revendication 1, dans lequel ladite structure à cellules ouvertes (126) présente un motif répétitif.

3. Moteur à turbine à gaz selon la revendication 1 ou la revendication 2, dans lequel la structure de montage (121) comporte une patte (122) montant la structure de montage sur le carter.

4. Moteur à turbine à gaz selon une quelconque revendication précédente, dans lequel la structure à cellules ouvertes (126) comporte une pluralité de formes agencées en réseau.

5. Moteur à turbine à gaz selon une quelconque revendication précédente, dans lequel la structure à cellules ouvertes (126) comporte une pluralité de formes d'ailette avec des espaces/ouvertures intermédiaires.

6. Moteur à turbine à gaz selon une quelconque revendication précédente, dans lequel la structure à cellules ouvertes (126) s'étend le long d'un angle en direction d'un axe central du moteur (10) ou de la plaque de montage (200).

7. Moteur à turbine à gaz selon la revendication 6, dans lequel l'angle s'étend radialement vers l'intérieur perpendiculairement à l'axe central.

8. Moteur à turbine à gaz selon la revendication 6, dans lequel l'angle n'est pas perpendiculaire à l'axe central.

9. Moteur à turbine à gaz selon une quelconque revendication précédente, dans lequel la plaque de montage (200) est entièrement fermée.

10. Moteur à turbine à gaz selon une quelconque revendication précédente, dans lequel la plaque de montage (200) n'est pas plane.

11. Moteur à turbine à gaz selon une quelconque revendication précédente, dans lequel la plaque de montage (200) est fixée à la structure de montage (121) avec une brasure (202).

12. Moteur à turbine à gaz selon une quelconque revendication précédente, dans lequel la structure à cellules ouvertes est usinée dans la pièce intégrale en matériau abradable.

13. Moteur à turbine à gaz selon une quelconque revendication précédente, dans lequel la structure de montage (121) s'étend sur une étendue circonférentielle limitée, et est utilisé en combinaison avec d'autres combinaisons de garniture d'étanchéité et de montage abradables.
